# EUROPEAN PATENT SPECIFICATION

(11) **EP 2 795 119 B1**
(45) Date of publication and mention of the grant of the patent: **09.03.2016**
(21) Application number: 12810053.4
(22) Date of filing: 19.12.2012
(51) Int. Cl.: F03D 80/00

(54) **DE-ICING OF A WIND TURBINE BLADE**
ENTEISUNG EINER WINDTURBINENSCHAUFEL
DÉGIVRAGE D'UNE PALE DE TURBINE ÉOLIENNE

(30) Priority: 21.12.2011 DK 201170736; 23.12.2011 US 201161579656 P
(43) Date of publication of application: 29.10.2014
(73) Proprietor: Vestas Wind Systems A/S, 8200 Aarhus N (DK)
(72) Inventor: WONG, Voon Hon, Singapore 248358 (SG); BAHUGUNI, Anand, 600224, Singapore (SG); KANDASAMY, Ravi, Singapore 730679 (SG)
(74) Representative: Vestas Patents Department
(86) International application number: PCT/DK2012/050482
(87) International publication number: WO 2013/091651

(56) References cited:
- EP-A1- 1 375 913
- EP-A2- 0 376 371
- WO-A2-2010/028653
- DE-A1- 19 621 485
- US-A- 3 933 327
- US-A- 4 482 114

## Description

### Field of the Invention

The invention relates to wind turbine generators (WTG's) used in the generation of electricity. In particular, the invention relates to means of removing ice from a rotor blade of a wind turbine generator.

### Background

Blade de-icing is critical in WTG because there is a 20% to 50% increase in the loss production factor. Ice accretion on wind turbine blades causes:
- Change in aerodynamic shape resulting in significantly reduced power production
- Increased root loads and reduced blade life
- Unbalanced mass on the rotor plane
- Danger of ice throw from the blades

In the case of melting ice, the principal characteristic is the surface-ice interface temperature which has to be above freezing. When melting occurs at the blade surface-ice interface, chunks of ice fall off as a result of wind and gravity forces.

The amount of heat and the time required to melt the ice depends on numerous factors. These include the thickness of the ice layer, the loss of heat from the external surfaces of the blade, the external ambient temperature, and most importantly, the efficiency of the method fro transferring the heat from the source to the frozen areas.

EP0376371A2 describes thermal anti-icing systems for aircraft.

US3933327A describes an aircraft anti-icing plenum.

US4482114A describes an integrated thermal anti-icing and environmental control system.

EP1375913A1 describes a wind turbine with discoid generator.

DE19621485A1 describes a warm air heating device for preventing icing-up of rotor blades of wind power plant.

### Summary of Invention

In a first aspect the invention provides a rotor blade heating assembly for a wind turbine generator, the assembly comprising: a heat reservoir mounted within said blade of the wind turbine generator; a heat source for supplying heat to the heat reservoir; a plurality of thermal conductors projecting from said heat reservoir to a surface of said blade.

Accordingly, the delivery of heat through conduction from the reservoir to, or adjacent to, the surface of a rotor blade, then the elevation of temperature to the surface will consequently create a liquid/solid phase change allowing the ice to break up and fall from the blade.

In one embodiment the heat source may include an insulated duct for delivering hot air from a hot air source to the heat reservoir. Further, the heat reservoir may be substantially hollow or void into which the hot air is directed. Further, such a void may include an array of heat transfer fins within the void of the heat reservoir such that hot air delivered from the duct into the heat reservoir heats the heat transfer fins delivering heat to a thermal mass of said heat reservoir.

In one embodiment the heat reservoir may be mounted to a structural support, or spar, of the blade. Alternatively, the heat reservoir may include a portion of said spar. For instance, the heat reservoir may have a portion for receiving heat such as a cavity for receiving hot air with a portion of the spar acting as a thermal mass for receiving heat such that conductors project from said thermal mass. In a further embodiment the heat conductors may project from the heat reservoir to a surface layer of the blade. In a further embodiment the surface layer may be a heat conductive material such as aluminum nitride or boron nitride. Still further, said conductive layer may be a single layer covering the blade. Alternatively, there may be a plurality of heat conductive layers located on said blade.

The thermal conductors, or conductive rods, may cover the final third of the blade span. Accordingly, the weight of the heating assembly may be reduced by concentrating the application of heat to the most critical region of the blade.

The thermal conductors may project from the heat reservoir and terminate at a point adjacent to the surface of the blade. A tip of the thermal conductors may be sandwiched in between the material of the leading edge, and so allow the heat to be conducted to the leading edge and spread uniformly along the length of the leading edge. In a still further embodiment, heat may be applied to the blade adjacent to both the leading edge and the trailing edge. Ice that is removed from the leading edge may migrate around the blade and re-freeze on the trailing edge. By providing heat to the trailing edge, this migrating ice may be prevented from re-freezing and so prevented from re-forming.

Alternatively, the thermal conductors may terminate so as to be flush with a surface of the blade. In a further alternative, the thermal conductors may terminate at, or adjacent to, a leading edge of the blade. In a still further embodiment, the thermal conductors may terminate at a thermal layer applied to the surface, or leading edge of the blade.

An advantage of the present invention may include, the speed at which the blade surface-ice interfacial layer reaches above freezing point is increased.

The present invention may operate when the blades are either stationary or when they are rotating.

The use of thermally conductive Aluminium or Boron Nitride may be advantageous as both materials have good dielectric properties (dielectric constant values are similar to that of E-glass, which is used in the construction of the blades). Such materials also have good thermal conductivity. The use of these materials will not result in additional susceptibility to lightning strikes on the blades.

### Brief Description of Drawings

It will be convenient to further describe the present invention with respect to the accompanying drawings that illustrate possible arrangements of the invention. Other arrangements of the invention are possible and consequently, the particularity of the accompanying drawings is not to be understood as superseding the generality of the preceding description of the invention.
Figure 1 is a cross-sectional view of a wind turbine generator blade having a heat assembly according to one embodiment of the present invention;
Figure 2 is a detailed view of an end of a wind turbine generator blade showing a portion of the heating assembly according to a further embodiment of the present invention;
Figure 3 is a cross-sectional view of a heat reservoir according to a further embodiment of the present invention.
Figure 4 is an elevation view of a wind turbine generator for receiving a heat assembly according to the present invention.

### Detailed Description

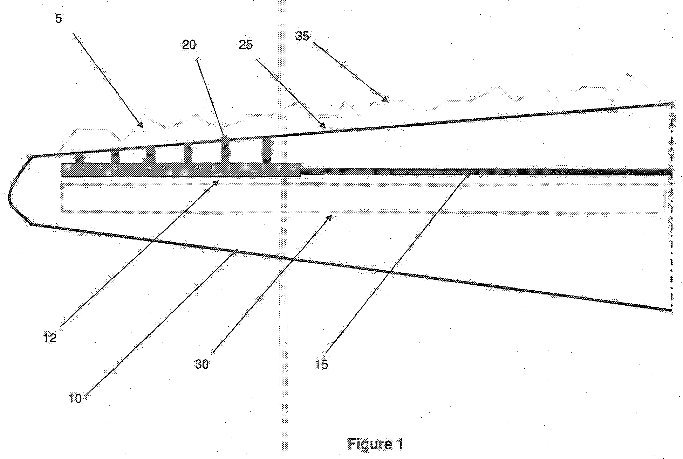

Figure 1 shows a cross-section of a rotor blade 10 for a wind turbine generator. The blade 10 has suffered an accretion of ice 35 on a leading edge. As a means of removing the ice and/or preventing its formation, a heating assembly 5 has been mounted within the blade 10 which provides heat to the leading edge 25 so as to melt the contact interface of the ice with the blade and so allowing the ice to fall off.

The heating assembly 5 comprises a heat reservoir 12 mounted within the blade 10. The blade may be mounted directly to the structural spar 30 of the blade. Alternatively, the heat reservoir may be formed as part of the spar itself.

The heat reservoir 12 receives heat from a heat source through a heat transfer conduit 15 which may be a conventional duct depending upon the delivery of heat. For instance, in the case of hot air being pumped to the heat reservoir 12, the duct 15 may be an insulated hot air duct.

Projecting from the heat reservoir 12 is a plurality of thermal conductors 20 projecting to the leading edge 25 or alternatively adjacent to the leading edge. Accordingly, the conductors may penetrate the blade so as to be flush with a surface of the blade or alternatively applying heat to the surface in order to achieve heating of the ice 35.

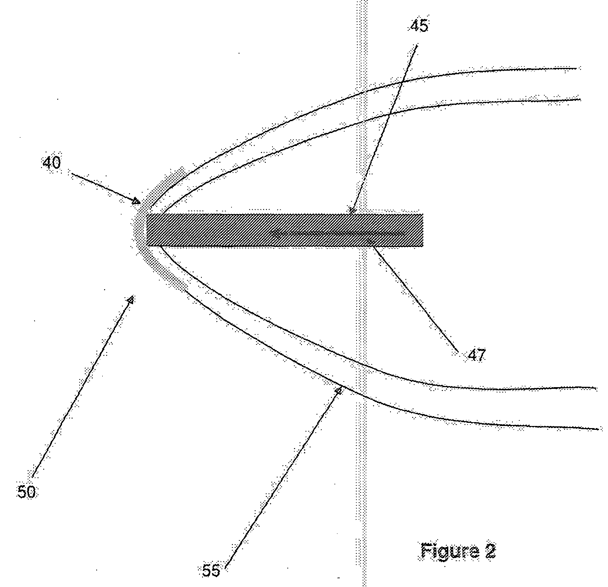

Figure 2 shows one embodiment of the present invention whereby the conductor 45 projects to the leading edge 50 so as to be in contact with a thermal layer 40 placed, or applied, about the leading edge. The conductor transmits heat 47 from the heat reservoir (not shown) to the layer 40 so as to transfer heat around the leading edge so as to either remove ice or prevent its formation. Such a thermal layer/skin may be of a similar material to the conductor. For instance, both the conductor and skin may be of material such as aluminum nitride or boron nitride. These materials are effective thermal conductors, and avoid the use of mentals within the blade which may represent a lightning hazard to the overall structure.

The layer 40 may be of the order of 150 to 200 microns subject to the material. Thus, the layer may be a spray-on layer which is consistent with such thickness.

It is not the intention to make the leading edge, or the thermal layer, a thermal mass for retaining heat, but merely to elevate the temperature of the leading edge sufficiently so as to remove or prevent ice build-up. The heat reservoir which is more easily insulated therefore provides a thermal mass to maintain the communication of heat to the leading edge. Accordingly, the heat reservoir may be of sufficient thermal mass to allow for intermittent transfer of heat from the heat source and so avoid the need for a continuous flow of heat. Alternatively, such a continuous flow of heat, such as a continuous flow of hot air, may be used in order to transfer sufficient heat to the leading edge.

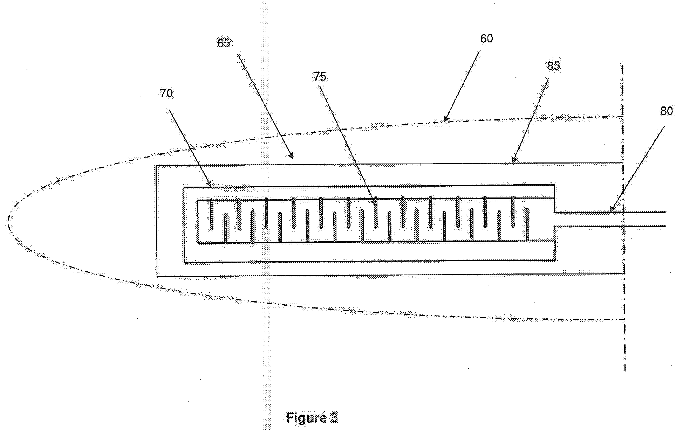

Figure 3 shows one possible arrangement of the heat reservoir 65. Here, a hollow container 70 having sufficiently thick walls to provide a thermal mass and defining a void/cavity therein. Within the cavity is an array of heat transfer fins 75 arranged to receive heat from a heat source. In this embodiment the heat source is hot air delivered to the heat reservoir 70 through an insulated hot air duct 80.

The heat reservoir 65 is mounted to a spar 85 acting as a structural element within a blade 60. The heat reservoir 65 is located within a 1st third of the blade 60 with the heat conductors (not shown for clarity) having as short a path as possible from the heat reservoir 65 to the leading edge of the blade.

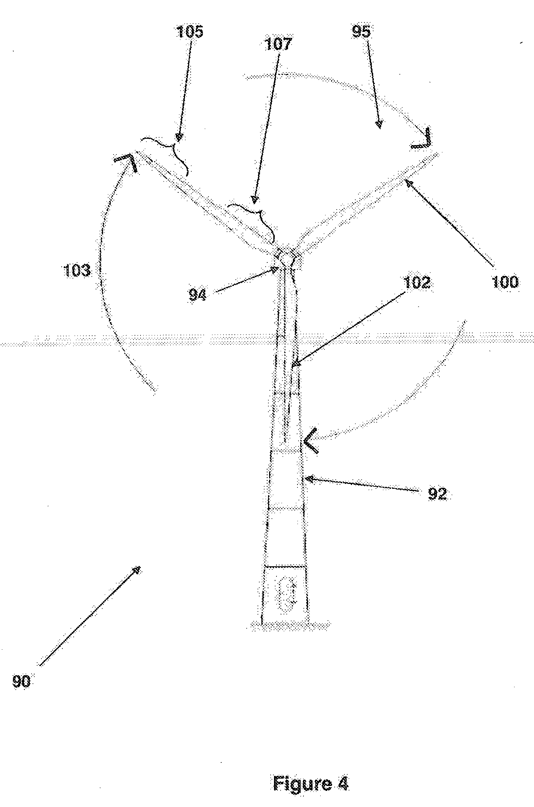

Figure 4 shows a wind turbine generator 90 into which the heat assembly may be mounted. A heat generator (not shown) may be mounted in the nacelle 94 or the tower 92 supporting the nacelle, subject to the form of the heat generator. This may include a heating coil through which hot air is passed, or a hot water interface heated by solar thermal energy. The particular form the heat generator does not limit the invention, and many such generators of heat may be used to provide sufficient heat to operate the heat assembly.

The blades 95 into which the heat assembly is mounted include a leading edge 100, about which the ice forms. The blade further includes a first third 105 which, by virtue of the distance from the nacelle will have the greatest influence on the torque of the blade, and the final third 107, allowing the most efficient application of heat to the blade.

## Claims

1. A rotor blade heating assembly for a wind turbine generator, the assembly (5) comprising:
a heat reservoir (12) mounted within said blade (10) of the wind turbine generator;
a heat source for supplying heat to the heat reservoir (12);
a plurality of thermal conductors (20) projecting from said heat reservoir (12) to a surface of said blade (10).

2. The rotor blade heating assembly according to claim 1, wherein the thermal conductors (20) project to a leading edge (25) of said blade (10).

3. The rotor blade heating assembly according to claim 1 or 2, wherein said thermal conductors (20) flush with a surface of said blade (10).

4. The rotor blade heating assembly according to any one claims 1 to 3, further including a thermal layer (40) applied to surface of blade (10) adjacent to said thermal conductors (20) to distribute heat transferred from said thermal conductors (20).

5. The rotor blade heating assembly according to claim 4, wherein the thermal layer (40) is applied to the leading edge of said blade (10).

6. The rotor blade heating assembly according to any one claims 1 to 5, wherein the heat reservoir (12) is mounted to a spar (30) of said blade (10).

7. The rotor blade heating assembly according to any one claims 1 to 6, wherein said material is aluminium nitride or boron nitride.

8. The rotor blade heating assembly according to any one claims 1 to 7, wherein the heat source is a hot air source, said supply of heat provided through hot air ducts from said heat source to the heat reservoir (12).

9. The rotor blade heating assembly according to claim 8, wherein the heat reservoir (12) includes a void into which the hot air is directed, and a thermal mass arranged to receive heat from the hot air.

10. The rotor blade heating assembly according to claim 9, wherein the void includes an array of heat transfer fins (75) for receiving heat from the hot air.

11. A wind turbine generator comprising:
a rotor blade (10) and a heating assembly (5), the assembly comprising:
a heat reservoir (12) mounted within said blade (10) of the wind turbine generator;
a heat source for supplying heat to the heat reservoir (12);
a plurality of thermal conductors (20) projecting from said heat reservoir (12) to a surface of said blade (10).

## Patentansprüche

1. Eine Rotorblatt-Heizanordnung für einen Windturbinengenerator, die Anordnung (5) umfassend:
einen innerhalb des Blattes (10) des Windturbinengenerators befestigten Wärmespeicher (12);
eine Wärmequelle zum Liefern von Wärme zu dem Wärmespeicher (12);
eine Mehrzahl von Wärmeleitern (20), die aus dem Wärmespeicher (12) bis zu einer Oberfläche des Blattes (10) herausragen.

2. Die Rotorblatt-Heizanordnung nach Anspruch 1, wobei die Wärmeleiter (20) bis zu einer Anströmkante (25) des Blattes (10) herausragen.

3. Die Rotorblatt-Heizanordnung nach Anspruch 1 oder 2, wobei die Wärmeleiter (20) mit einer Oberfläche des Blattes (10) abschließen.

4. Die Rotorblatt-Heizanordnung nach einem der Ansprüche 1 bis 3, weiterhin aufweisend eine Wärmeschicht (40), die auf eine Oberfläche des Blattes (10) angrenzend an die Wärmeleiter (20) aufgebracht ist, um von den Wärmeleitern (20) übertragene Wärme zu verteilen.

5. Die Rotorblatt-Heizanordnung nach Anspruch 4, wobei die Wärmeschicht (40) auf der Anströmkante des Blattes (10) aufgebracht ist.

6. Die Rotorblatt-Heizanordnung nach einem der Ansprüche 1 bis 5, wobei der Wärmespeicher (12) an einem Holm (30) des Blattes (10) befestigt ist.

7. Die Rotorblatt-Heizanordnung nach einem der Ansprüche 1 bis 6, wobei das Material Aluminiumnitrid oder Bornitrid ist.

8. Die Rotorblatt-Heizanordnung nach einem der Ansprüche 1 bis 7, wobei die Wärmequelle eine Heißluftquelle ist, wobei das Liefern von Wärme von der Wärmequelle zu dem Wärmespeicher (12) durch Heißluftkanäle erfolgt.

9. Die Rotorblatt-Heizanordnung nach Anspruch 8, wobei Wärmespeicher (12) einen Hohlraum aufweist, in den die Heißluft gelenkt wird, und eine thermisch wirksame Masse, die angeordnet ist, um Wärme von der Heißluft aufzunehmen.

10. Die Rotorblatt-Heizanordnung nach Anspruch 9, wobei der Hohlraum zur Aufnahme von Wärme von der Heißluft eine Anordnung von Wärmeübertragungslamellen (75) aufweist.

11. Ein Windturbinengenerator aufweisend:
ein Rotorblatt (10) und eine Heizanordnung (5), die Anordnung umfassend:
einen innerhalb des Blattes (10) des Windturbinengenerators befestigten Wärmespeicher (12);
eine Wärmequelle zum Liefern von Wärme zu dem Wärmespeicher (12);
eine Mehrzahl von Wärmeleitern (20), die aus dem Wärmespeicher (12) bis zu einer Oberfläche des Blattes (10) herausragen.

## Revendications

1. Ensemble de chauffage de pale de rotor destiné à un générateur de turbine éolienne, l'ensemble (5) comprenant :
un réservoir de chaleur (12) monté dans ladite pale (10) du générateur de turbine éolienne ;
une source de chaleur destinée à apporter la chaleur au réservoir de chaleur (12) ;
une pluralité de conducteurs thermiques (20) faisant saillie depuis ledit réservoir (12) jusqu'à une surface de ladite pale (10).

2. Ensemble de chauffage de pale de rotor selon la revendication 1, dans lequel les conducteurs thermiques (20) font saillie jusqu'à un bord d'attaque (25) de ladite pale (10).

3. Ensemble de chauffage de pale de rotor selon la revendication 1 ou 2, dans lequel lesdits conducteurs thermiques (20) sont dans l'alignement d'une surface de ladite pale (10).

4. Ensemble de chauffage de pale de rotor selon l'une quelconque des revendications 1 à 3, comprenant en outre une couche thermique (40) appliquée à une surface de pale (10) adjacente auxdits conducteurs thermiques (20) afin de répartir la chaleur transférée depuis lesdits conducteurs thermiques (20).

5. Ensemble de chauffage de pale de rotor selon la revendication 4, dans lequel la couche thermique (40) est appliquée au bord d'attaque de ladite pale (10).

6. Ensemble de chauffage de pale de rotor selon l'une quelconque des revendications 1 à 5, dans lequel le réservoir de chaleur (12) est monté sur un longeron (30) de ladite pale (10).

7. Ensemble de chauffage de pale de rotor selon l'une quelconque des revendications 1 à 6, dans lequel ledit matériau est de nitrure d'aluminium ou du nitrure de bore.

8. Ensemble de chauffage de pale de rotor selon l'une quelconque des revendications 1 à 7, dans lequel la source de chaleur est une source d'air chaud, ledit apport de chaleur se faisant par l'intermédiaire de conduits d'air chaud depuis ladite source de chaleur jusqu'au réservoir de chaleur (12).

9. Ensemble de chauffage de pale de rotor selon la revendication 8, dans lequel le réservoir de chaleur (12) comprend un vide dans lequel est dirigé l'air chaud, et une masse thermique conçue pour recevoir la chaleur provenant de l'air chaud.

10. Ensemble de chauffage de pale de rotor selon la revendication 9, dans lequel le vide comprend en groupe d'ailettes de transfert de chaleur (75) pour recevoir la chaleur provenant de l'air chaud.

11. Générateur de turbine éolienne comprenant :
une pale (10) de rotor et un ensemble de chauffage (5), l'ensemble comprenant :
un réservoir de chaleur (12) monté dans ladite pale (10) du générateur de turbine éolienne ;
une source de chaleur destinée à apporter la chaleur au réservoir de chaleur (12) ;
une pluralité de conducteurs thermiques (20) faisant saillie depuis ledit réservoir de chaleur (12) jusqu'à une surface de ladite pale (10).
